# EUROPEAN PATENT SPECIFICATION

(11) **EP 3 995 886 B1**
(45) Date of publication and mention of the grant of the patent: **10.05.2023**
(21) Application number: 19937240.0
(22) Date of filing: 08.07.2019
(51) Int. Cl.: G02F 1/167, G02F 1/1675, G02F 1/1676, G02F 1/1685

(54) **ELECTROPHORETIC FLUID, IMAGE DISPLAY DEVICE, AND IMAGE DISPLAY DRIVING METHOD**
ELEKTROPHORETISCHE FLÜSSIGKEIT, BILDANZEIGEVORRICHTUNG UND ANSTEUERUNGSVERFAHREN FÜR EINE BILDANZEIGE
FLUIDE ÉLECTROPHORÉTIQUE, DISPOSITIF D'AFFICHAGE D'IMAGE ET PROCÉDÉ DE COMMANDE D'AFFICHAGE D'IMAGE

(30) Priority: 05.07.2019 CN 201910603323
(43) Date of publication of application: 11.05.2022
(73) Proprietor: Wuxi Vision Peak Technology Co., Ltd., Wuxi, Jiangsu 214028 (CN)
(72) Inventor: BAO, Jin, Wuxi, Jiangsu 214028 (CN); CHEN, Shan, Wuxi, Jiangsu 214028 (CN); TANG, Zhenxing, Wuxi, Jiangsu 214028 (CN); XU, Jun, Wuxi, Jiangsu 214028 (CN)
(74) Representative: Bayramoglu et al.
(86) International application number: PCT/CN2019/095063
(87) International publication number: WO 2021/003634

(56) References cited:
- CN-A- 102 789 108
- CN-A- 105 593 923
- CN-U- 205 158 832
- JP-A- 2013 250 404
- US-A1- 2011 134 508
- US-A1- 2017 031 229
- US-A1- 2018 307 115

## Description

### TECHNICAL FIELD

The present invention relates to the field of electrophoretic display apparatuses, and in particular, to an electrophoretic liquid, an image display device and an image display driving method.

### BACKGROUND

The electrophoretic liquid used in an existing multicolor particle display screen includes a first type of pigment particles, a second type of pigment particles and a third type of pigment particles. The second type of pigment particles and the third type of pigment particles have the same charge polarity. However, the third type of pigment particles has low strength, and the second type of pigment particles has a threshold voltage. US2011/134508A1 discloses an electrophoretic liquid including first particles that have the property of scattering light over an entire visible range and positively or negatively charged; second particles that have the property of absorbing light of a specific wavelength range in the visible range and are charged to a polarity opposite to that of the first particles; third particles that have the property of scattering light over the entire visible range and are charged to a polarity the same as that of the second particles; and a dispersion medium that has the property of allowing the light of the specific wavelength range absorbed by the second particles to pass through and absorbing light of ranges other than the specific wavelength range. US2018/307115A1 discloses a full color display device in which each pixel can display at least seven different optical states. Each pixel comprises two subpixels, and each subpixel includes a respective subpixel electrode driven by a driver. The electrophoretic fluid includes four types of particles, dispersed in a solvent or solvent mixture and each subpixel can display at least four different color states. US2017/031229A1 discloses driving methods for color display devices in order to reduce complexity of the active matrix backplane used for this type of display devices. There are some problems in driving the existing multicolor particle display screen, which may be summarized as follows:
1. Limited by the threshold voltage, the second type of pigment particles needs to be driven by a high voltage, resulting in high power consumption.
2. The third type of pigment particles has low strength, leading to long driving time and low refresh rate.
3. The existing multicolor particle display screen may contradict with principle of the thermodynamic principle. As time passes, the second type of pigment particles with high strength will gradually become similar to the third type of pigment particles with low strength in terms of charge strength, resulting in that the second type of pigment particles and the third type of pigment particles cannot be separated from each other, and the two types of pigment particles will be mixed to produce a mixed color.

### SUMMARY

To overcome the shortcomings in the prior art, the electrophoretic liquid, the image display device and the image display driving method provided in the present invention can enable control on upward and downward movements of particles by applying different positive and negative voltages, such that different colors can be presented.

According to the technical solutions provided in the present invention, as a first aspect of the present invention an electrophoretic liquid is provided as defined in claim 1.

As a second aspect of the present invention an image display device is provided as defined in dependent claim 2. Preferred embodiments of the image display device are claimed in dependent claims 3-4.

As a third aspect of the present invention an image display driving method is provided as defined in claim 5. Preferred embodiments of the image display driving method are claimed in dependent claims 6-8.

As can be seen, the electrophoretic liquid, the image display device and the image display driving method provided in the present invention have the following advantages over the prior art:
First, the third type of pigment particles can be directly driven, and the refresh rate of an electrophoretic liquid display screen can be increased.
Second, none of the first type of pigment particles, the second type of pigment particles and the third type of pigment particles has a threshold voltage, and therefore, the driving voltage is low and the power consumption is low.
Third, the second type of pigment particles is equal to the third type of pigment particles in charge strength. Accordingly, the charges of the second type of pigment particles and the third type of pigment particles will not attract each other, and the second type of pigment particles and the third type of pigment particles will be prevented from being mixed to produce a mixed color.

### BRIEF DESCRIPTION OF THE DRAWINGS

FIG. 1 is a schematic structure diagram illustrating the second aspect of the present invention.
FIG. 2 is a schematic diagram illustrating a first embodiment of the first aspect and the second aspect of the present invention.
FIG. 3 is a schematic diagram illustrating a second embodiment of the first aspect and the second aspect of the present invention.

List of Reference Numerals: 1-first type of pigment particles, 2-second type of pigment particles, 3-third type of pigment particles, 100-display unit, 100a-first display unit, 100b-second display unit, 100c-third display unit, 110-electrophoresis chamber, 120-observation side panel, 121-ITO layer, 122-transparent electrode layer, 130-opposite side panel, 131-TFT layer, 132-pixel electrode layer, 133-pixel electrode spacing layer, 140-plasma barrier weir, and 141-spacing particle.

### DETAILED DESCRIPTION OF THE EMBODIMENTS

In order to make the objectives, technical solutions, and advantages of the present invention clearer and more comprehensible, the present invention is described in further detail below with reference to the examples and accompanying drawings. Like reference numerals refer to like components throughout the drawings.

In the following description, although numerous features are designated as optional, e.g. by being introduced by "may" or "can", it is nevertheless acknowledged that all features comprised in each of the independent claims are not to be read as optional.

As the first aspect of the present invention, an electrophoretic liquid is provided. The electrophoretic liquid includes: a first type of pigment particles 1, a second type of pigment particles 2 and a third type of pigment particles 3. The first type of pigment particles 1, the second type of pigment particles 2 and the third type of pigment particles 3 are the same in particle size, and the particle size ranges from 200 nm to 600 nm, preferably, from 300 nm to 400 nm. The second type of pigment particles 2 has a charge polarity the same as that of the third type of pigment particles 3, and the mass of the second type of pigment particles 2 is 3-6 times that of the third type of pigment particles 3. Preferably, the mass of the second type of pigment particles 2 is 4-5 times that of the third type of pigment particles 3.

It needs to be explained that the first type of pigment particles 1 is white or black, while the second type of pigment particles 2 is black or white, and the third type of pigment particles 3 is colored, which may be various colors such as red, yellow, orange, green and blue. The first type of pigment particles 1, the second type of pigment particles 2 and the third type of pigment particles 3 are the same in charge strength. It needs to be explained that the charge strength indicates the amount of charge of each pigment particle, and none of the first type of pigment particles 1, the second type of pigment particles 2 and the third type of pigment particles 3 has a threshold voltage.

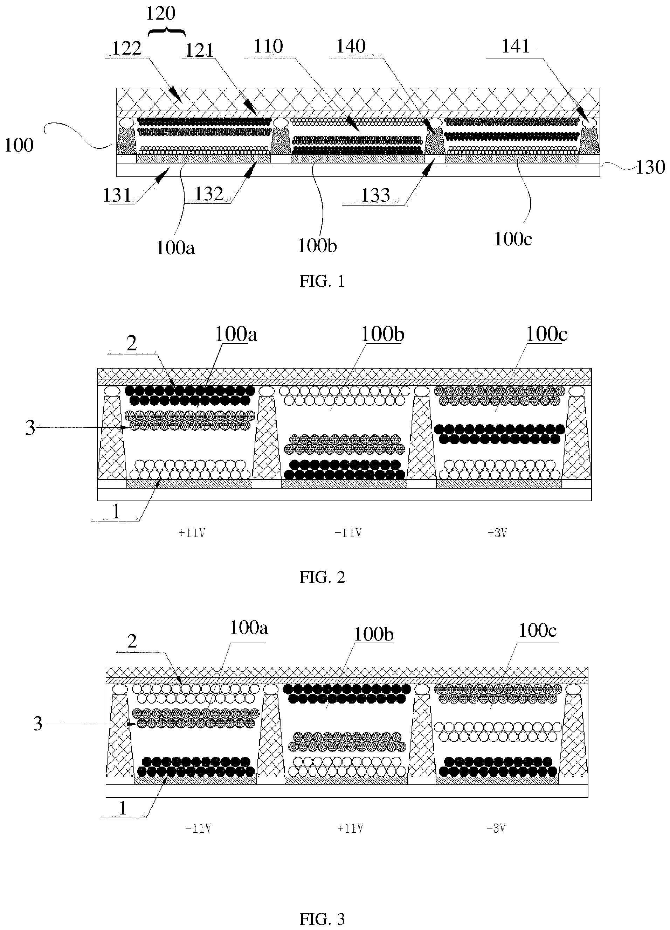

A first embodiment of the first aspect of the present invention:
As shown in FIG. 2, the first type of pigment particles 1 is white and negatively charged, while the second type of pigment particles 2 is black and positively charged, and the third type of pigment particles 3 is colored and positively charged.

A second embodiment of the first aspect of the present invention:
As shown in FIG. 3, the first type of pigment particles 1 is black and positively charged, while the second type of pigment particles 2 is white and negatively charged, and the third type of pigment particles 3 is colored and negatively charged.

As the second aspect of the present invention, an image display device is provided. The image display device includes a plurality of display units 100. As shown in FIG. 1 to FIG. 3, the display units 100 include a first display unit 100a, a second display unit 100b and a third display unit 100c that are arranged in sequence from left to right.

Each display unit 100 includes an electrophoresis chamber 110. The electrophoresis chamber 110 is filled with the electrophoretic liquid according to the first aspect of the present invention. A top of the electrophoresis chamber 110 is formed by an observation side panel 120, and a bottom of the electrophoresis chamber 110 is formed by an opposite side panel 130. The electrophoresis chamber 110 is surrounded by a plasma barrier weir 140, and two adjacent display units 100 are isolated by the plasma barrier weir 140.

The opposite side panel 130 of each display unit 100 includes a TFT layer 131. The TFT layers 131 of two adjacent display units 100 are connected. A pixel electrode layer 132 is disposed on the TFT layer 131 of each display unit 100, and a pixel electrode spacing layer 133 is disposed between the pixel electrode layers 132 of two adjacent display units 100, and two adjacent pixel electrode layers 132 are isolated by the pixel electrode spacing layer 133. The plasma barrier weir 140 is disposed on the pixel electrode spacing layer 133, and a spacing particle 141 is disposed on the plasma barrier weir 140.

The observation side panel 120 of each display unit 100 includes an ITO layer 121 and a transparent electrode layer 122. The ITO layers 121 of two adjacent display units 100 are connected, and the transparent electrode layers 122 of two adjacent display units 100 are connected. The ITO layer 121 is in contact with the spacing particle 141 on the plasma barrier weir 140. The transparent electrode layer 122 is disposed on the ITO layer 121.

As the third aspect of the present invention, an image display driving method is provided. The image display driving method specifically includes the following steps:
S1: Apply a voltage to the pixel electrode layers 132 of the display units 100 in the image display device according to the second aspect of the present invention.
S2: Set the voltage applied as any one of a high voltage with a positive charge polarity, a high voltage with a negative charge polarity, a low voltage with a positive charge polarity, and a low voltage with a negative charge polarity. It needs to be explained that the high voltage has a voltage value ranging from +8 V to +15 V or from -15 V to -8 V, and the low voltage has a voltage value ranging from +2 V to +6 V or from -6 V to -2 V.
S3: Based on the difference in the voltage applied to the pixel electrode layer 132 of each display unit 100, present a color corresponding to pigment particles in an electrophoretic liquid on the side of the transparent electrode layer 122 of each display unit 100.

A first embodiment of the third aspect:
Reference is made to a first display unit 100a shown in FIG. 2 and a first display unit 100a shown in FIG. 3.

S110: when a voltage applied to the pixel electrode layers 132 of the display units 100 is a high voltage and the high voltage has a charge polarity opposite to that of a first type of pigment particles 1 in an electrophoretic liquid, the second type of pigment particles 2 and the third type of pigment particles 3 have a charge polarity the same as that of the high voltage.

S120: an electric field force exerted by the pixel electrode layers 132 on the first type of pigment particles 1 is an attractive force, and an electric field force exerted by the pixel electrode layers 132 on the second type of pigment particles 2 and the third type of pigment particles 3 is a repulsive force; the first type of pigment particles 1 moves to the side of the pixel electrode layers 132 under the action of the attractive force, while the second type of pigment particles 2 and the third type of pigment particles 3 move to the side of the transparent electrode layers 122 under the action of the repulsive force.

S130: since the mass of the second type of pigment particles 2 is 3-6 times that of the third type of pigment particles 3, the third type of pigment particles 3 on the transparent electrode layers 122 is pushed away by the second type of pigment particles 2, and the second type of pigment particles 2 thus moves to be over the third type of pigment particles 3.

S140: the color of the second type of pigment particles 2 is presented on the side of the transparent electrode layers 122 of the display units 100.

Specifically, as illustrated in the first display unit 100a in FIG. 2, the first type of pigment particles 1 is white and negatively charged, while the second type of pigment particles 2 is black and positively charged, and the third type of pigment particles 3 is colored and positively charged.

The voltage applied to the pixel electrode layers 132 of the display units 100 is a high voltage, and the high voltage is +11 V.

The first type of pigment particles 1 moves to the side of the pixel electrode layers 132 under the attractive force of the pixel electrode layers 132, while the second type of pigment particles 2 and the third type of pigment particles 3 move to the side of the transparent electrode layers 122 under the action of the repulsive force of the pixel electrode layers 132.

Since the mass of the second type of pigment particles 2 is 3-6 times that of the third type of pigment particles 3, the third type of pigment particles 3 on the transparent electrode layers 122 is pushed away by the second type of pigment particles 2, and the second type of pigment particles 2 thus moves to be over the third type of pigment particles 3. As a result, the color, i.e., black, presented by the second type of pigment particles 2 is observed from the side of the transparent electrode layers 122.

A second embodiment of the third aspect:
Reference is made to a second display unit 100b shown in FIG. 2 and a second display unit 100b shown in FIG. 3.

S210: when a voltage applied to the pixel electrode layers 132 of the display units 100 is a high voltage and the high voltage has a charge polarity the same as that of a first type of pigment particles 1 in an electrophoretic liquid, the second type of pigment particles 2 and the third type of pigment particles 3 have a charge polarity opposite to that of the high voltage.

S220: an electric field force exerted by the pixel electrode layers 132 on the first type of pigment particles 1 is a repulsive force, and an electric field force exerted by the pixel electrode layers 132 on the second type of pigment particles 2 and the third type of pigment particles 3 is an attractive force; the first type of pigment particles 1 moves to the side of the transparent electrode layers 122 under the action of the repulsive force, while the second type of pigment particles 2 and the third type of pigment particles 3 move to the side of the pixel electrode layers 132 under the action of the attractive force.

S230: since the mass of the second type of pigment particles 2 is 3-6 times that of the third type of pigment particles 3, the third type of pigment particles 3 on the pixel electrode layers 132 is pushed away by the second type of pigment particles 2, and the third type of pigment particles 3 thus moves to be over the second type of pigment particles 2.

S240: accordingly, the color of the first type of pigment particles 1 is presented on the side of the transparent electrode layers 122 of the display units 100.

Specifically, as illustrated in the second display unit 100b in FIG. 2, the first type of pigment particles 1 is white and negatively charged, while the second type of pigment particles 2 is black and positively charged, and the third type of pigment particles 3 is colored and positively charged.

When the voltage applied to the pixel electrode layers 132 of the display units 100 is a high voltage and the high voltage is -11 V, the high voltage has a charge polarity the same as that of the first type of pigment particles 1 in the electrophoretic liquid, and the second type of pigment particles 2 and the third type of pigment particles 3 have a charge polarity opposite to that of the high voltage.

The first type of pigment particles 1 moves to the side of the transparent electrode layers 122 under the repulsive force of the pixel electrode layers 132, while the second type of pigment particles 2 and the third type of pigment particles 3 move to the side of the pixel electrode layers 132 under the action of the attractive force of the pixel electrode layers 132.

Since the mass of the second type of pigment particles 2 is 3-6 times that of the third type of pigment particles 3, the third type of pigment particles 3 on the pixel electrode layers 132 is pushed away by the second type of pigment particles 2, and only the second type of pigment particles 2 is left on the pixel electrode layers 132. As a result, the color, i.e., white, presented by the first type of pigment particles 1 is observed from the side of the transparent electrode layers 122.

A third embodiment of the third aspect:
Reference is made to a third display unit 100c shown in FIG. 2 and a third display unit 100c shown in FIG. 3.

S310: when a voltage applied to the pixel electrode layers 132 of the display units 100 is a low voltage and the low voltage has a charge polarity opposite to that of a first type of pigment particles 1 in an electrophoretic liquid, the second type of pigment particles 2 and the third type of pigment particles 3 have a charge polarity the same as that of the low voltage.

S320: an electric field force exerted by the pixel electrode layers 132 on the first type of pigment particles 1 is an attractive force, and an electric field force exerted by the pixel electrode layers 132 on the second type of pigment particles 2 and the third type of pigment particles 3 is a repulsive force; the first type of pigment particles 1 then moves to the side of the pixel electrode layers 132 under the action of the attractive force of the pixel electrode layers 132, while the second type of pigment particles 2 and the third type of pigment particles 3 move to the side of the transparent electrode layers 122 under the action of the repulsive force of the pixel electrode layers 132.

S330: since the mass of the second type of pigment particles 2 is 3-6 times that of the third type of pigment particles 3 and the second type of pigment particles 2 and the third type of pigment particles 3 are the same in amount of charge, the electric field forces exerted by the pixel electrode layer 132 on the second type of pigment particles 2 and the third type of pigment particles 3 are identical, and therefore, when the third type of pigment particles 3 smaller in mass is exerted with the identical repulsive force by the pixel electrode layers 132, the third type of pigment particles 3 has a greater acceleration than the second type of pigment particles 2 in movement, and the third type of pigment particles 3 moves to be over the second type of pigment particles 2.

S340: the color of the third type of pigment particles 3 is presented on the side of the transparent electrode layers 122 of the display units 100.

Specifically, as illustrated in the third display unit 100c in FIG. 2, the first type of pigment particles 1 is white and negatively charged, while the second type of pigment particles 2 is black and positively charged, and the third type of pigment particles 3 is colored and positively charged.

The voltage applied to the pixel electrode layers 132 of the display units 100 is a low voltage, and the low voltage is +3 V.

The first type of pigment particles 1 moves to the side of the pixel electrode layers 132 under the attractive force of the pixel electrode layers 132, while the second type of pigment particles 2 and the third type of pigment particles 3 move to the side of the transparent electrode layers 122 under the action of the repulsive force of the pixel electrode layers 132.

Since the mass of the second type of pigment particles 2 is 3-6 times that of the third type of pigment particles 3 and the electric field forces exerted by the pixel electrode layer132 on the second type of pigment particles 2 and the third type of pigment particles 3 are identical, the third type of pigment particles 3 smaller in mass, when exerted with the identical repulsive force by the pixel electrode layers 132, has a greater acceleration than the second type of pigment particles 2 in movement. Accordingly, the third type of pigment particles 3 moves to be over the second type of pigment particles 2, and the color presented by the third type of pigment particles 3 is observed from the side of the transparent electrode layers 122.

It needs to be noted that as shown in FIG. 3, for the electrophoretic liquid in the second embodiment of the first aspect of the present invention, the image display driving methods according to the third aspect of the present invention is the same as the above three embodiments.

## Claims

1. An electrophoretic liquid, comprising a first type of pigment particles (1), a second type of pigment particles (2) and a third type of pigment particles (3), wherein
the first type of pigment particles (1), the second type of pigment particles (2) and the third type of pigment particles (3) are the same in particle size; the second type of pigment particles (2) has a charge polarity the same as that of the third type of pigment particles (3), and the first type of pigment particles (1) has a charge polarity opposite to that of the third type of pigment particles (3); and wherein the first type of pigment particles (1), the second type of pigment particles (2) and the third type of pigment particles (3) have different colors from each other; the first type of pigment particles (1) is white or black, while the second type of pigment particles (2) is black or white, and the third type of pigment particles (3) is colored rather than white or black; the first type of pigment particles (1), the second type of pigment particles (2) and the third type of pigment particles (3) are the same in charge strength such that they have same amount of charge; none of the first type of pigment particles (1), the second type of pigment particles (2) and the third type of pigment particles (3) has a threshold voltage; and the mass of the second type of pigment particles (2) is 3-6 times that of the third type of pigment particles (3).

2. An image display device, comprising a plurality of display units (100), wherein each display unit (100) comprises an electrophoresis chamber (110), and each electrophoresis chamber (110) is filled with the electrophoretic liquid according to claim 1, wherein a top of the electrophoresis chamber (110) is formed by an observation side panel (120), and a bottom of the electrophoresis chamber (110) is formed by an opposite side panel (130); the electrophoresis chamber (110) is surrounded by a plasma barrier weir (140); and two adjacent display units (100) are isolated by the plasma barrier weir (140).

3. The image display device according to claim 2, wherein the observation side panel (120) of each display unit (100) comprises an indium tin oxide (ITO) layer (121) and a transparent electrode layer (122); the ITO layer (121) is disposed over the plasma barrier weir (140), and the transparent electrode layer (122) is disposed on the ITO layer (121); the ITO layers (121) of two adjacent display units (100) are connected, and the transparent electrode layers (122) of two adjacent display units (100) are connected.

4. The image display device according to claim 3, wherein the opposite side panel (130) of each display unit (100) comprises a thin film transistor (TFT) layer (131); a pixel electrode layer (132) is disposed on the TFT layer (131) of each display unit (100), and the TFT layers (131) of two adjacent display units (100) are connected; a pixel electrode spacing layer (133) is disposed between the pixel electrode layers (132) of two adjacent display units (100), and two adjacent pixel electrode layers (132) are isolated by the pixel electrode spacing layer (133); the plasma barrier weir (140) is disposed on the pixel electrode spacing layer (133); and a spacing particle (141) is disposed on the plasma barrier weir (140).

5. An image display driving method of the image display device according to claim 4, comprising:
applying a voltage to the pixel electrode layers (132) of the display units (100) in the image display device;
setting the voltage applied as any one of a high voltage with a positive charge polarity, a high voltage with a negative charge polarity, a low voltage with a positive charge polarity, and a low voltage with a negative charge polarity; and
based on a difference in the voltage applied to the pixel electrode layer (132) of each display unit (100), presenting a color corresponding to pigment particles in the electrophoretic liquid on the side of the transparent electrode layer (122) of each display unit (100).

6. The image display driving method according to claim 5, wherein
the voltage applied to the pixel electrode layers (132) of the display units (100) is a high voltage and the high voltage has a charge polarity opposite to that of the first type of pigment particles (1) in the electrophoretic liquid, the second type of pigment particles (2) and the third type of pigment particles (3) have a charge polarity the same as that of the high voltage;
an electric field force exerted by the pixel electrode layers (132) on the first type of pigment particles (1) is an attractive force, and an electric field force exerted by the pixel electrode layers (132) on the second type of pigment particles (2) and the third type of pigment particles (3) is a repulsive force; the first type of pigment particles (1) moves to the side of the pixel electrode layers (132) under an action of the attractive force, while the second type of pigment particles (2) and the third type of pigment particles (3) move to the side of the transparent electrode layers (122) under an action of the repulsive force;
the high voltage has such a height that the third type of pigment particles (3) on the transparent electrode layers (122) is pushed away by the second type of pigment particles (2), and the second type of pigment particles (2) moves to be over the third type of pigment particles (3); and
the color of the second type of pigment particles (2) is presented on the side of the transparent electrode layers (122) of the display units (100).

7. The image display driving method according to claim 5 or 6, wherein
the voltage applied to the pixel electrode layers (132) of the display units (100) is a high voltage and the high voltage has a charge polarity the same as that of the first type of pigment particles (1) in the electrophoretic liquid, the second type of pigment particles (2) and the third type of pigment particles (3) have a charge polarity opposite to that of the high voltage;
the electric field force exerted by the pixel electrode layers (132) on the first type of pigment particles (1) is a repulsive force, and the electric field force exerted by the pixel electrode layers (132) on the second type of pigment particles (2) and the third type of pigment particles (3) is an attractive force; the first type of pigment particles (1) moves to the side of the transparent electrode layers (122) under an action of the repulsive force, while the second type of pigment particles (2) and the third type of pigment particles (3) move to the side of the pixel electrode layers (132) under an action of the attractive force;
the high voltage has such a height that the third type of pigment particles (3) on the pixel electrode layers (132) is pushed away by the second type of pigment particles (2), and only the second type of pigment particles (2) is left on the pixel electrode layer (132); and
the color of the first type of pigment particles (1) is presented on the side of the transparent electrode layers (122) of the display units (100).

8. The image display driving method according to claim 5, wherein
the voltage applied to the pixel electrode layers (132) of the display units (100) is a low voltage and the low voltage has a charge polarity opposite to that of the first type of pigment particles (1) in the electrophoretic liquid, the second type of pigment particles (2) and the third type of pigment particles (3) have a charge polarity the same as that of the low voltage;
the electric field force exerted by the pixel electrode layers (132) on the first type of pigment particles (1) is an attractive force, and the electric field force exerted by the pixel electrode layers (132) on the second type of pigment particles (2) and the third type of pigment particles (3) is a repulsive force; the first type of pigment particles (1) moves to the side of the pixel electrode layers (132) under an action of the attractive force, while the second type of pigment particles (2) and the third type of pigment particles (3) move to the side of the transparent electrode layers (122) under an action of the repulsive force;
since the repulsive force exerted on the third type of pigment particles (3) is the same as that exerted on the second type of pigment particles (2), an acceleration of the third type of pigment particles (3) is greater than that of the second type of pigment particles (2); and the third type of pigment particles (3) moves to be over the second type of pigment particles (2); and
the height of the low voltage is such that the color of the third type of pigment particles (3) is presented on the side of the transparent electrode layers (122) of the display units (100).

## Patentansprüche

1. Elektrophoretische Flüssigkeit, umfassend eine erste Art von Pigmentteilchen (1), eine zweite Art von Pigmentteilchen (2) und eine dritte Art von Pigmentteilchen (3), wobei
die erste Art von Pigmentteilchen (1), die zweite Art von Pigmentteilchen (2) und die dritte Art von Pigmentteilchen (3) die gleiche Teilchengröße aufweisen; die zweite Art von Pigmentteilchen (2) eine Ladungspolarität aufweist, die gleich derjenigen der dritten Art von Pigmentteilchen (3) ist, und die erste Art von Pigmentteilchen (1) eine Ladungspolarität aufweist, die derjenigen der dritten Art von Pigmentteilchen (3) entgegengesetzt ist; und wobei die erste Art von Pigmentteilchen (1), die zweite Art von Pigmentteilchen (2) und die dritte Art von Pigmentteilchen (3) unterschiedliche Farben aufweisen; die erste Art von Pigmentteilchen (1) weiß oder schwarz ist, während die zweite Art von Pigmentteilchen (2) schwarz oder weiß ist, und die dritte Art von Pigmentteilchen (3) farbig statt weiß oder schwarz ist; die erste Art von Pigmentteilchen (1), die zweite Art von Pigmentteilchen (2) und die dritte Art von Pigmentteilchen (3) die gleiche Ladungsstärke aufweisen, derart, dass sie dieselbe Ladungsmenge aufweisen; keine von der ersten Art von Pigmentteilchen (1), der zweiten Art von Pigmentteilchen (2) und der dritten Art von Pigmentteilchen (3) eine Schleusenspannung aufweist; und die Masse der zweiten Art von Pigmentteilchen (2) das 3- bis 6-Fache der dritten Art von Pigmentteilchen (3) beträgt.

2. Bildanzeigevorrichtung, umfassend eine Vielzahl von Anzeigeeinheiten (100), wobei jede Anzeigeeinheit (100) eine Elektrophoresekammer (110) umfasst und jede Elektrophoresekammer (110) mit der elektrophoretischen Flüssigkeit nach Anspruch 1 gefüllt ist, wobei eine Oberseite der Elektrophoresekammer (110) durch eine Beobachtungsseitenblende (120) gebildet ist und eine Unterseite der Elektrophoresekammer (110) durch eine gegenüberliegende Seitenblende (130) gebildet ist; wobei die Elektrophoresekammer (110) von einem Plasmabarrieredamm (140) umgeben ist; und zwei benachbarte Anzeigeeinheiten (100) durch den Plasmabarrieredamm (140) voneinander isoliert sind.

3. Bildanzeigevorrichtung according to claim 2, wobei die Beobachtungsseitenblende (120) jeder Anzeigeeinheit (100) eine Indiumzinnoxid(ITO)-Schicht (121) und eine transparente Elektrodenschicht (122) umfasst; wobei die ITO-Schicht (121) über dem Plasmabarrieredamm (140) angeordnet ist und die transparente Elektrodenschicht (122) auf der ITO-Schicht (121) angeordnet ist; wobei die ITO-Schichten (121) von zwei benachbarten Anzeigeeinheiten (100) verbunden sind und die transparent Elektrodenschichten (122) von zwei benachbarten Anzeigeeinheiten (100) verbunden sind.

4. Bildanzeigevorrichtung nach Anspruch 3, wobei die gegenüberliegende Seitenblende (130) jeder Anzeigeeinheit (100) eine Dünnfilmtransistor(TFT)-Schicht (131) umfasst; eine Pixelelektrodenschicht (132) auf der TFT-Schicht (131) jeder Anzeigeeinheit (100) angeordnet ist und die TFT-Schichten (131) von zwei benachbarten Anzeigeeinheiten (100) verbunden sind; wobei eine Pixelelektrodenbeabstandungsschicht (133) zwischen den Pixelelektrodenschichten (132) von zwei benachbarten Anzeigeeinheiten (100) angeordnet ist und zwei benachbarte Pixelelektrodenschichten (132) durch die Pixelelektrodenbeabstandungsschicht (133) isoliert sind; wobei der Plasmabarrieredamm (140) auf der Pixelelektrodenbeabstandungsschicht (133) angeordnet ist; und ein Beabstandungsteilchen (141) auf dem Plasmabarrieredamm (140) angeordnet ist.

5. Bildanzeigeansteuerungsverfahren der Bildanzeigevorrichtung nach Anspruch 4, umfassend:
Anlegen einer Spannung an die Pixelelektrodenschichten (132) der Anzeigeeinheiten (100) in der Bildanzeigevorrichtung;
Einstellen der angelegten Spannung als eins von einer Hochspannung mit einer positiven Ladungspolarität, einer Hochspannung mit einer negativen Ladungspolarität, einer Niederspannung mit einer positiven Ladungspolarität, und einer Niederspannung mit einer negativen Ladungspolarität; und
auf Grundlage einer Differenz der an die Pixelelektrodenschicht (132) jeder Anzeigeeinheit (100) angelegten Spannung Präsentieren einer Farbe, die Pigmentteilchen in der elektrophoretischen Flüssigkeit entspricht, auf der Seite der transparenten Elektrodenschicht (122) jeder Anzeigeeinheit (100).

6. Bildanzeigeansteuerungsverfahren nach Anspruch 5, wobei
die an die Pixelelektrodenschichten (132) der Anzeigeeinheiten (100) angelegte Spannung eine Hochspannung ist und die Hochspannung eine Ladungspolarität entgegengesetzt zu derjenigen der ersten Art von Pigmentteilchen (1) in der elektrophoretischen Flüssigkeit aufweist, während die zweite Art von Pigmentteilchen (2) und die dritte Art von Pigmentteilchen (3) eine Ladungspolarität aufweisen, die gleich derjenigen der Hochspannung ist;
eine elektrische Feldkraft, die die Pixelelektrodenschichten (132) auf die erste Art von Pigmentteilchen (1) ausüben, eine Anziehungskraft ist, und eine elektrische Feldkraft, die die Pixelelektrodenschichten (132) auf die zweite Art von Pigmentteilchen (2) und die dritte Art von Pigmentteilchen (3) ausüben, eine Abstoßungskraft ist; sich die erste Art von Pigmentteilchen (1) aufgrund der Anziehungskraft zur Seite der Pixelelektrodenschichten (132) verlagert, während sich die zweite Art von Pigmentteilchen (2) und die dritte Art von Pigmentteilchen (3) aufgrund der Abstoßungskraft zur Seite der transparenten Elektrodenschichten (122) verlagern;
die Hochspannung so hoch ist, dass die dritte Art von Pigmentteilchen (3) auf den transparent Elektrodenschichten (122) durch die zweite Art von Pigmentteilchen (2) verdrängt wird und sich die zweite Art von Pigmentteilchen (2) über die dritte Art von Pigmentteilchen (3) verlagert; und
die Farbe der zweiten Art von Pigmentteilchen (2) auf der Seite der transparenten Elektrodenschichten (122) der Anzeigeeinheiten (100) präsentiert wird.

7. Bildanzeigeansteuerungsverfahren nach Anspruch 5 oder 6, wobei
die an die Pixelelektrodenschichten (132) der Anzeigeeinheiten (100) angelegte Spannung eine Hochspannung ist und die Hochspannung eine Ladungspolarität gleich zu derjenigen der ersten Art von Pigmentteilchen (1) in der elektrophoretischen Flüssigkeit aufweist, während die zweite Art von Pigmentteilchen (2) und die dritte Art von Pigmentteilchen (3) eine Ladungspolarität aufweisen, die entgegengesetzt zu derjenigen der Hochspannung ist;
die elektrische Feldkraft, die die Pixelelektrodenschichten (132) auf die erste Art von Pigmentteilchen (1) ausüben, eine Abstoßungskraft ist, und die elektrische Feldkraft, die die Pixelelektrodenschichten (132) auf die zweite Art von Pigmentteilchen (2) und die dritte Art von Pigmentteilchen (3) ausüben, eine Anziehungskraft ist; sich die erste Art von Pigmentteilchen (1) aufgrund der Abstoßungskraft zur Seite der transparenten Elektrodenschichten (122) verlagert, während sich die zweite Art von Pigmentteilchen (2) und die dritte Art von Pigmentteilchen (3) aufgrund der Anziehungskraft zur Seite der Pixelelektrodenschichten (132) verlagern;
die Hochspannung so hoch ist, dass die dritte Art von Pigmentteilchen (3) auf den Pixelelektrodenschichten (132) durch die zweite Art von Pigmentteilchen (2) verdrängt wird und nur die zweite Art von Pigmentteilchen (2) auf der Pixelelektrodenschicht (132) verbleibt;
und
die Farbe der ersten Art von Pigmentteilchen (1) auf der Seite der transparenten Elektrodenschichten (122) der Anzeigeeinheiten (100) präsentiert wird.

8. Bildanzeigeansteuerungsverfahren nach Anspruch 5, wobei
die an die Pixelelektrodenschichten (132) der Anzeigeeinheiten (100) angelegte Spannung eine Niederspannung ist und die Niederspannung eine Ladungspolarität entgegengesetzt zu derjenigen der ersten Art von Pigmentteilchen (1) in der elektrophoretischen Flüssigkeit aufweist, während die zweite Art von Pigmentteilchen (2) und die dritte Art von Pigmentteilchen (3) eine Ladungspolarität aufweisen, die gleich derjenigen der Niederspannung ist;
die elektrische Feldkraft, die die Pixelelektrodenschichten (132) auf die erste Art von Pigmentteilchen (1) ausüben, eine Anziehungskraft ist, und die elektrische Feldkraft, die die Pixelelektrodenschichten (132) auf die zweite Art von Pigmentteilchen (2) und die dritte Art von Pigmentteilchen (3) ausüben, eine Abstoßungskraft ist; sich die erste Art von Pigmentteilchen (1) aufgrund der Anziehungskraft zur Seite der Pixelelektrodenschichten (132) verlagert, während sich die zweite Art von Pigmentteilchen (2) und die dritte Art von Pigmentteilchen (3) aufgrund der Abstoßungskraft zur Seite der transparenten Elektrodenschichten (122) verlagern;
da die Abstoßungskraft, die auf die dritte Art von Pigmentteilchen (3) ausgeübt wird, gleich wie die ist, die auf die zweite Art von Pigmentteilchen (2) ausgeübt wird, eine Beschleunigung der dritten Art von Pigmentteilchen (3) größer als die der zweiten Art von Pigmentteilchen (2) ist; und die dritte Art von Pigmentteilchen (3) sich verlagert, sodass sie über der zweiten Art von Pigmentteilchen (2) liegt; und
die Höhe der Niederspannung derart ist, dass die Farbe der dritten Art von Pigmentteilchen (3) auf der Seite der transparenten Elektrodenschichten (122) der Anzeigeeinheiten (100) präsentiert wird.

## Revendications

1. Un liquide électrophorétique, comprenant un premier type de particules de pigment (1), un deuxième type de particules de pigment (2) et un troisième type de particules de pigment (3), dans lequel
le premier type de particules de pigment (1), le deuxième type de particules de pigment (2) et le troisième type de particules de pigment (3) sont identiques en taille de particule ; le deuxième type de particules de pigment (2) est de charge de polarité identique à celle du troisième type de particules de pigment (3), et le premier type de particules de pigment (1) est de charge de polarité opposée à celle du troisième type de particules de pigment (3) ; et dans lequel le premier type de particules de pigment (1), le deuxième type de particules de pigment (2) et le troisième type de particules de pigment (3) sont de couleurs différentes les uns des autres ; le premier type de particules de pigment (1) est blanc ou noir, tandis que le deuxième type de particules de pigment (2) est noir ou blanc, et le troisième type de particules de pigment (3) est coloré plutôt que blanc ou noir ; le premier type de particules de pigment (1), le deuxième type de particules de pigment (2) et le troisième type de particules de pigment (3) sont identiques en puissance de charge de sorte qu'ils ont la même quantité de charge ; aucun du premier type de particules de pigment (1), du deuxième type de particules de pigment (2) et du troisième type de particules de pigment (3) n'est doté d'une tension de seuil ; et la masse du deuxième type de particules de pigment (2) est de 3-6 fois celle du troisième type de particules de pigment (3).

2. Un dispositif d'affichage d'image, comprenant une pluralité d'unités d'affichage (100), dans lequel chaque unité d'affichage (100) comprend une chambre d'électrophorèse (110), et chaque chambre d'électrophorèse (110) est remplie du liquide électrophorétique selon la revendication 1, dans lequel le sommet de la chambre d'électrophorèse (110) est formé par un panneau latéral d'observation (120), et la base de la chambre d'électrophorèse (110) est formée par un panneau latéral opposé (130) ; la chambre d'électrophorèse (110) est entourée d'une digue de barrière à plasma (140) ; et deux unités d'affichage adjacentes (100) sont isolées par la digue de barrière à plasma (140).

3. Un dispositif d'affichage d'image selon la revendication 2, dans lequel le panneau latéral d'observation (120) de chaque unité d'affichage (100) comprend une couche d'oxyde d'indium étain (ITO) (121) et une couche d'électrode transparente (122) ; la couche d'ITO (121) est agencée au-dessus de la digue de barrière à plasma (140), et la couche d'électrode transparente (122) est agencée sur la couche d'ITO (121) ; les couches d'ITO (121) de deux unités d'affichage (100) adjacentes sont raccordées, et les couches d'électrode transparente (122) de deux unités d'affichage (100) adjacentes sont raccordées.

4. Un dispositif d'affichage d'image selon la revendication 3, dans lequel le panneau latéral opposé (130) de chaque unité d'affichage (100) comprend une couche de transistors en couche mince (TFT) (131) ; une couche d'électrode de pixel (132) est agencée sur la couche TFT (131) de chaque unité d'affichage (100), et les couches TFT (131) de deux unités d'affichage (100) adjacentes sont raccordées ; une couche d'espacement d'électrode de pixel (133) est agencée entre la couche d'électrode de pixel (132) de deux unités d'affichage (100) adjacentes, et deux couches d'électrode de pixel (132) adjacentes sont isolées par la couche d'espacement d'électrode de pixel (133) ; la digue de barrière à plasma (140) est agencées sur la couche d'espacement d'électrode de pixel (133) ; et une particule d'espacement (141) est agencées sur la digue de barrière à plasma (140).

5. Un procédé de commande d'affichage d'image du dispositif d'affichage d'image selon la revendication 4, comprenant :
appliquer une tension à la couche d'électrode de pixel (132) aux unités d'affichage (100) dans le dispositif d'affichage d'image ;
régler la tension appliquée en tant que haute tension quelconque avec une polarité de charge positive, une haute tension avec une polarité de charge négative, une basse tension avec une polarité de charge positive, et une basse tension avec une polarité de charge négative ; et
en se basant sur la différence de tension appliquée à la couche d'électrode de pixel (132) de chaque unité d'affichage (100), présenter une couleur correspondant aux particules de pigment dans le liquide électrophorétique sur le côté de la couche d'électrode transparente (122) de chaque unité d'affichage (100).

6. Un procédé de commande d'affichage d'image selon la revendication 5, dans lequel
la tension appliquée aux couches d'électrodes de pixel (132) des unités d'affichage (100) est une haute tension et la haute tension est dotée d'une polarité de charge opposée à celle du premier type de particules de pigment (1) dans le liquide électrophorétique, le deuxième type de particules de pigment (2) et le troisième type de particules de pigment (3) ont une polarité de charge identique à celle de la haute tension ;
la force de champ électrique exercée par les couches d'électrode de pixel (132) sur le premier type de particules de pigment (1) est une force attractive, et la force de champ électrique exercée par les couches d'électrode de pixel (132) sur le deuxième type de particules de pigment (2) et le troisième type de particules de pigment (3) est une force répulsive ; le premier type de particules de pigment (1) se déplace sur le côté des couches d'électrode de pixel (132) sous l'action de la force attractive, tandis que le deuxième type de particules de pigment (2) et le troisième type de particules de pigment (3) se déplacent sur le côté des couches d'électrode transparente (122) sous l'action de la force répulsive ;
la haute tension est d'une hauteur telle que le troisième type de particules de pigment (3) sur les couches d'électrode transparente (122) est repoussé par le deuxième type de particules de pigment (2), et le deuxième type de particules de pigment (2) se déplace pour se trouver au-dessus du troisième type de particules de pigment (3) ; et
la couleur du deuxième type de particules de pigment (2) est présentée sur le côté des couches d'électrode transparente (122) des unités d'affichage (100).

7. Un procédé de commande d'affichage d'image selon la revendication 5 ou 6, dans lequel
la tension appliquée aux couches d'électrode de pixel (132) des unités d'affichage (100) est une haute tension et la haute tension est dotée d'une polarité de charge identique à celle du premier type de particules de pigment (1) dans le liquide électrophorétique, le deuxième type de particules de pigment (2) et le troisième type de particules de pigment (3) sont dotés d'une polarité de charge opposée à celle de la haute tension ;
la force de champ électrique exercée par les couches d'électrode de pixel (132) sur le premier type de particules de pigment (1) est une force répulsive, et la force de champ électrique exercée par les couches d'électrode de pixel (132) sur le deuxième type de particules de pigment (2) et le troisième type de particules de pigment (3) est une force attractive ; le premier type de particules de pigment (1) se déplace sur le côté des couches d'électrode transparente (122) sous l'action de la force répulsive, tandis que le deuxième type de particules de pigment (2) et le troisième type de particules de pigment (3) se déplacent sur le côté des couches d'électrode de pixel (132) sous l'action de la force attractive ;
la haute tension est d'une hauteur telle que le troisième type de particules de pigment (3) sur les couches d'électrode de pixel (132) est repoussé par le deuxième type de particules de pigment (2), et seul le deuxième type de particules de pigment (2) reste sur la couche d'électrode de pixel (132) ;
et
la couleur du deuxième type de particules de pigment (1) est présentée sur le côté des couches d'électrode transparente (122) des unités d'affichage (100).

8. Un procédé de commande d'affichage d'image selon la revendication 5, dans lequel
la tension appliquée aux couches d'électrode de pixel (132) des unités d'affichage (100) est une basse tension et la basse tension est dotée d'une polarité de charge opposée à celle du premier type de particules de pigment (1) dans le liquide électrophorétique, le deuxième type de particules de pigment (2) et le troisième type de particules de pigment (3) sont dotés d'une polarité de charge identique à celle de la basse tension ;
la force de champ électrique exercée par les couches d'électrode de pixel (132) sur le premier type de particules de pigment (1) est une force attractive, et la force de champ électrique exercée par les couches d'électrode de pixel (132) sur le deuxième type de particules de pigment (2) et le troisième type de particules de pigment (3) est une force répulsive ; le premier type de particules de pigment (1) se déplace sur le côté des couches d'électrode de pixel (132) sous l'action de la force attractive, tandis que le deuxième type de particules de pigment (2) et le troisième type de particules de pigment (3) se déplacent sur le côté des couches d'électrode transparente (122) sous l'action de la force répulsive ;
la force répulsive exercée le troisième type de particules de pigment (3) étant identique à celle exercée sur le deuxième type de particules de pigment (2), l'accélération du troisième type de particules de pigment (3) est supérieure à celle du deuxième type de particules de pigment (2) ; et le troisième type de particules de pigment (3) se déplace pour se trouver au-dessus du deuxième type de particules de pigment (2) ; et
la hauteur de la basse tension est telle que la couleur du troisième type de particules de pigment (3) est présentée sur le côté des couches d'électrode transparente (122) des unités d'affichage (100).
